# EUROPEAN PATENT APPLICATION

(11) **EP 4 425 067 A1**
(43) Date of publication of application: **04.09.2024**
(21) Application number: 23382184.2
(22) Date of filing: 01.03.2023
(51) Int. Cl.: F24F 13/14, F16K 1/00, F24F 13/24

(54) **FLOW REGULATOR FOR AIR-CONDITIONING SYSTEMS**

(71) Applicant: Schako Iberia, S.L., 50840 San Mateo de Gallego (Zaragoza) (ES)
(72) Inventor: MÜLLER, Rainer Ferdinand, 50840 SAN MATEO DE GALLEGO (Zaragoza) (ES)
(74) Representative: Herrero & Asociados, S.L.

(57) **Abstract**

The flow regulator for air-conditioning systems comprises a housing (1) defining an inner space with an air passage section; at least one sealing element (4) movable between an open and closed position and vice versa, according to which the air passage section of the inner space is determined; and a divider (2) located inside the housing (1), which divides the inner space into two channels (3).

It allows avoiding or minimizing noise generation, reducing the minimum pressure drop of the regulator, reducing energy consumption, and also improving the accuracy of the measurement system at low flow rates.

## Description

### Object of the invention

The present invention relates to a flow regulator for air conditioning systems.

### Background to the invention

The main objective of any HVAC system is to provide comfort to the occupants of a building and to maintain healthy and safe air quality and space temperatures.

Variable air volume and volume flow control and demand-controlled ventilation systems enable energy-efficient distribution of the air-conditioning system by optimizing the quantity and temperature of the distributed air.

Unlike other air distribution systems, flow control and variable air volume and ventilation systems regulate the flow to efficiently condition each zone of the building, while maintaining the minimum required flow rates.

Air conditioning systems are essential to minimize the transmission of respiratory diseases and to maintain good indoor air quality in buildings. Poor air quality in buildings, in addition to lack of comfort, has negative effects on the health of the people who breathe it.

The thermal conditioning and ventilation needs in a building are not constant throughout the day or the year, but depend on various factors such as occupancy, indoor activity, outdoor environmental conditions, etc.

Air conditioning systems have to be dimensioned to cover the most unfavorable situations in terms of thermal power, flow rates, temperature, humidity, ventilation. However, they only need to be operated in these conditions at certain times of the year.

Variable airflow/volume and demand-controlled ventilation systems supply air at variable temperatures and flow rates from air handling units to different areas of the building. For this purpose, in addition to variable speed systems, such as fans and pumps, they require variable flow regulators.

Variable flow regulators are devices that control the amount of air that is distributed to each of the zones of a building, allowing the flow rate to be adapted to the instantaneous demand of each zone.

Flow regulators comprise a flow measurement element, a regulator, an actuating element, and a sealing element.

Based on a setpoint received from the control system, the flow rate measured at the measuring element of the regulator is compared to the setpoint received, and based on the positive or negative deviation, the actuating element performs the closing or opening action of a shutter element respectively, which reduces or increases the air passage section.

Measuring elements are essential for the control of the flow rate of the regulator, as the accuracy of the regulator's regulation depends to a large extent on their accuracy. There are different types of flow measurement devices, e.g., differential pressure, vortex, ultrasonic, etc.

The most common sealing elements are thin blades that are located in the center of the regulator and have a central pivot axis. When fully open, they are positioned parallel to the flow, minimizing air flow resistance. When rotating on their axis, they close the flow channel to increase the air flow resistance and control the flow rate. The flat geometry of the obturators facilitates the generation of vortices caused by the detachment of the boundary layer that occurs at the edges, from very small angles of rotation of the obturator and from minimum velocities.

On the other hand, the regulators generate a static pressure drop as a result of the resistance to the passage of air that they create with the sealing element to modulate the flow that they transmit. This static pressure drop occurs even when they are in the maximum opening position to allow the maximum flow rate to pass through, being a resistance that is constantly generated in the installation, and which represents an additional energy consumption.

### Description of the invention

Therefore, an objective of the present invention is to provide a flow regulator for air conditioning systems that avoids or minimizes noise generation, reduces the minimum pressure drop of the regulator, reduces energy consumption, and also improves the accuracy of the measurement system at low flow rates.

With the flow regulator of the invention, the above-mentioned disadvantages are solved and there are other advantages which will be described below.

The flow regulator according to the present invention is described in claim 1, and the dependent claims include additional features that are optional.

In particular, the flow regulator for air conditioning systems according to the present invention comprises:
- a housing defining an inner space with an air passage section;
- at least one movable sealing element between an open position and a closed position, and vice versa, according to which the air passage section of that inner space is determined; and
a divider located inside the housing, which divides the inner space into two channels.

These two channels increase the sound absorption surface and minimize noise generation.

According to a preferred embodiment, the divider has a rounded profile at one end and an acute-angled profile at the other end. In particular, the rounded profile corresponds to the air inlet and the acute-angled profile corresponds to the air outlet.

The shape of the divider and the possibility of concealing the sealing elements in the housing minimizes the minimum pressure drop of the regulator, thus reducing energy consumption.

Advantageously, the divider is arranged in the middle part of the inner space, dividing it into two equal channels.

in addition, preferably, each channel comprises a sealing element.

According to a preferred embodiment, each sealing element is movable between the open position and the closed position by rotating about an axis.

Preferably, the two sealing elements are controlled simultaneously by a transmission, e.g., they move together via a geared transmission, although a single sealing element could be used for both channels.

In addition, each sealing element has a substantially triangular cross-section profile, one side of which is slightly curved.

To increase noise attenuation, the divider is made of an acoustic insulating material.

In addition, the rounded profile of the divider is preferably provided with orifices and two inner chambers for flow measurement.

The sealing elements are preferably positioned in line with the rounded profile of the inlet end, so that the minimum passage section and therefore the highest velocity is in that transversal plane, improving measurement accuracy at low flow rates.

In addition, this passage section, by performing a contraction in the flow, accommodates the flow in such a way that it is uniform and independent of upstream or downstream disturbances. In this way, in addition to achieving an optimum flow profile for the entire operating speed range, it does not require disturbance-free distances upstream or downstream of the equipment.

On the other hand, the ratio between the height and length of the channels, the length being much greater than the height, allows for a developed flow in the channels, which, together with the smooth expansion at the outlet, made possible by the sharp-angled profile of the splitter, prevents the generation of vortices, and therefore minimizes noise generation, and achieves a very homogeneous flow at the outlet.

In addition, as the channels have a developed flow, they are also suitable for flow measurement with differential pressure measuring elements as well as any other method, such as ultrasonic, vortex, etc., as an alternative to flow measurement in the rounded profile at the inlet end.

### Brief description of the drawings

For a better understanding of what has been explained above, some drawings are included in which, schematically and only by way of a non-limiting example, a practical case of embodiment is represented.
Figure 1 is a perspective view of the flow regulator according to the present invention;
Figure 2 is a perspective view in longitudinal section of the flow regulator according to the present invention;
Figure 3 is a perspective sectional view of one end of the flow regulator according to the present invention, showing the sealing elements in their position of partial closure of the inner channels;
Figure 4 is a sectional view of a part of the flow regulator according to the present invention, showing the air flow inside the channels; and
Figure 5 is a longitudinal section view of the flow regulator according to the present invention, showing the sound wave reflections inside the channels.

### Description of a preferred embodiment

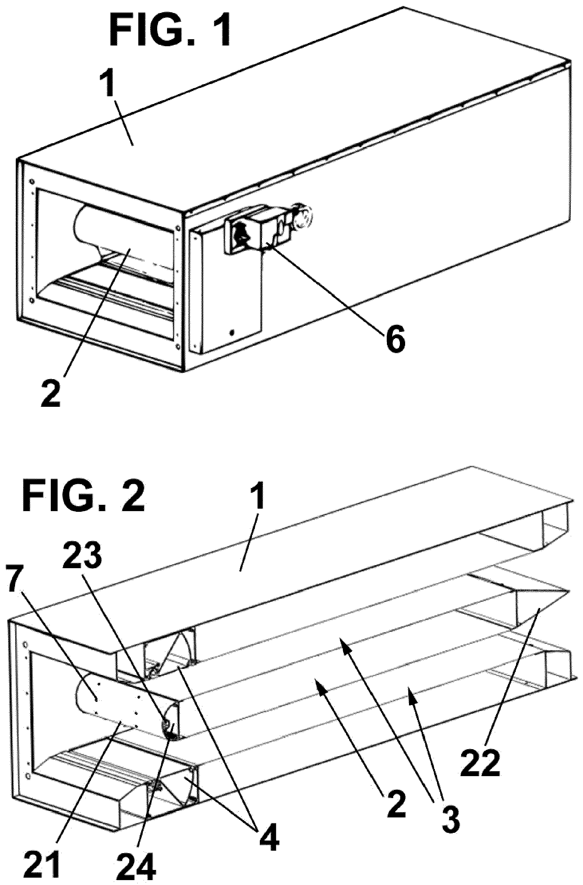

Figures 1 and 2 show the flow regulator for air conditioning systems according to the present invention.

The flow regulator comprises a housing 1 defining an inner space and a divider 2 which is placed inside the housing 1, separating the inner space into two channels 3.

As can be seen in these figures, the housing 1 is elongated and the divider 2 extends longitudinally along substantially the entire length of the housing 1.

According to the embodiment shown, the divider 2 is arranged in a mid-position inside the housing 1, so that the two channels 3 are equal.

The divider 2 has a first end, or front or air inlet end, with a rounded profile 21, and a second end, or rear or air outlet end, with an acute-angled profile 22.

This rounded profile 21 comprises orifices 7, and two inner chambers 23, 24 for measuring the air flow.

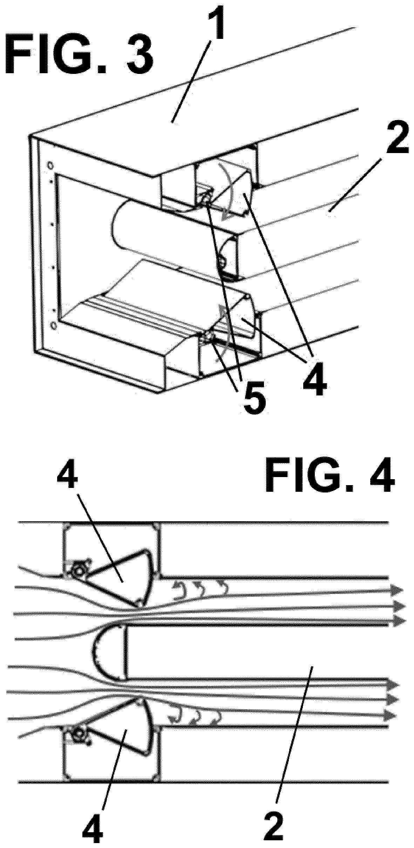

Each channel 3 comprises a sealing element 4, which is movable between an open position and a closed position and vice versa, according to which the air passage section of each channel 3 is determined. The open position is shown in figure 2, while the partially closed position is shown in figure 3.

According to the embodiment shown, each sealing element 4 is movable between said opening and closing positions by rotating around an axis 5. This axis 5 is located at a vertex of a triangle defined by the passage section of each sealing element 4, one of the sides of said triangle being slightly curved.

These sealing elements 4 are located next to the rounded profile 21 of the divider 2, as shown in figures 2 and 3.

The drive of the sealing elements 4 is provided by a drive element 6, located on the outside of the housing 1, as shown in Figure 1. In a preferred embodiment, there is a transmission between both shafts, e.g., by means of gears, so that both shafts are driven by a single drive element.

Figure 4 shows the air flow with the two sealing elements 4 in their partially closed position.

In their open position, the sealing elements 4 leave the channel completely free as they are integrated into the housing 1, thus reducing the minimum pressure drop of the regulator.

In this opening position, the vortices generated by the sealing elements are eliminated, preventing the generation of noise. In addition, it also allows the sealing elements not to be of the thin film type, but to have a three-dimensional volume, so that, instead of ending in an abrupt closing edge, a surface extends behind this edge, so that, in partial closing positions, they facilitate the adherence of the flow to this surface and reduce the detachment of the boundary layer, which reduces the generation of vortices and, therefore, the noise generated.

In addition, having two channels 3 increases the sound insulation surface in contact with the air and therefore the sound attenuation.

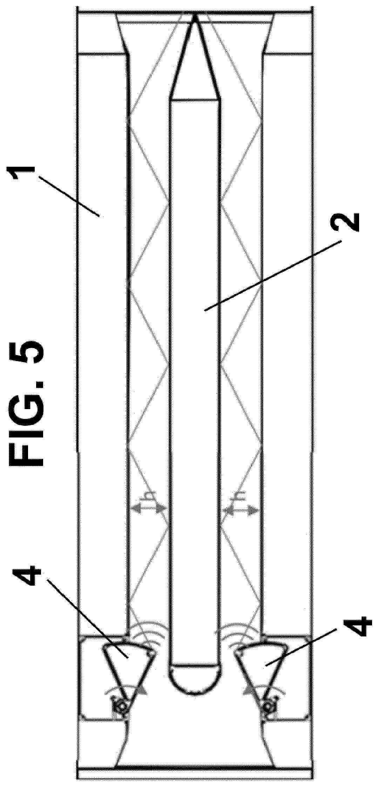

In addition, for the same free section, each channel is half the height of a single-channel regulator, so that the number of reflections and the acoustic attenuation are increased, as shown in figure 5.

Although reference has been made to a specific embodiment of the invention, it is obvious to a person skilled in the art that the flow regulator described is susceptible to numerous variations and modifications, and that all the details mentioned can be replaced by technically equivalent ones, without departing from the scope of protection defined by the appended claims.

## Claims

1. Flow regulator for air-conditioning systems, comprising:
- a housing (1) defining an inner space with an air passage section; and
- at least one sealing element (4) which is movable between an opening and a closing position and vice versa, according which the air passage section of the inner space is determined,
**characterized in that** it also comprises a divider (2) located inside the housing (1), which divides the inner space into two channels (3).

2. Flow regulator for air conditioning systems according to claim 1, wherein the divider (2) has a rounded profile (21) at one end and a sharp-angled profile (22) at the other end.

3. Flow regulator for air-conditioning systems according to claim 1 or 2, wherein the divider (2) is arranged in the middle part of the inner space, dividing it into two equal channels (3).

4. Flow regulator for air conditioning systems according to any one of the preceding claims, wherein each channel (3) comprises a sealing element (4).

5. Flow regulator for air-conditioning systems according to claim 4, wherein each sealing element (4) is movable between the open position and the closed position by rotating around an axis (5).

6. Flow regulator for air conditioning systems according to any one of the preceding claims, wherein the divider (2) is made of an acoustic insulating material.

7. Flow regulator for air conditioning systems according to any one of claims 2 to 6, wherein the rounded profile (21) of the divider (2) is provided with orifices (7).

8. Flow regulator for air conditioning systems according to any one of claims 2 to 7, wherein the rounded profile (21) of the divider (2) is provided with two inner chambers (23, 24).

9. Flow regulator for air-conditioning systems according to claim 4 or 5, wherein each sealing element (4) has a triangular cross-section profile.
